# EUROPEAN PATENT SPECIFICATION

(11) **EP 0 940 815 B1**
(45) Date of publication and mention of the grant of the patent: **10.08.2005**
(21) Application number: 99301621.1
(22) Date of filing: 04.03.1999
(51) Int. Cl.: G11B 27/32, G11B 20/12, G11B 19/02, G11B 27/10, H04N 5/85

(54) **Method for playing back catalogue information**
Kataloginformationswiedergabeverfahren
Méthode de reproduction d'information catalogue

(30) Priority: 06.03.1998 KR 9807525
(43) Date of publication of application: 08.09.1999
(60) Divisional application: 02015766.5
(73) Proprietor: SAMSUNG ELECTRONICS CO., LTD., Suwon-City, Kyungki-do (KR)
(72) Inventor: Ko, Jung-wan 315-401 Daewoo Apt., Suwon-si,Gyeonggi-do (KR); Heo, Jung-kwon, Seocho-gu, Seoul (KR); Heo, Jae-hoon, Intellec. Asset Management Group, Paldal-gu, Suwon-city, Kyungki-do (KR); Kang, Jung-seuk, Songpa-gu, Seoul (KR)
(74) Representative: Chugg, David John

(56) References cited:
- EP-A- 0 465 246
- EP-A- 0 718 845
- EP-A- 0 738 999
- US-A- 5 617 385

## Description

The present invention relates to the field of optical recording and/or playback, and more particularly, to a storage medium storing audio data and catalogue information related to the audio data and an apparatus and method for playing back catalogue information.

In an optical recording and/or playback apparatus in which a digital versatile disk (DVD) is used as a storage medium, a catalogue function, and an apparatus or method for performing the catalogue function has not been proposed.

In this context a catalogue typically indicates prints for effectively transferring to a viewer information on manufacturing audio as a main data recorded on the storage medium, the record contents, and the composer, the artist and/or a performer, or material and immaterial information for performing the same role. Particularly the catalogue is an additional data for illustrating the contents of the audio which is main data recorded on the storage medium, consisting of additional information such as still pictures and caption as a video information.

The catalogue data which is played back in a playback apparatus having a video decoder, preferably, has an inspecting function for reading the desired contents of the catalogue, without interfering with the playback of the audio.

It is also preferable that the catalogue information can be easily manufactured using the established editing system for DVD-Video.

In order to satisfy the above-described conditions, two types of information, i.e., audio and catalogue data of which are different functions in a storage medium must be simultaneously played back. Thus, even when the audio data is played back at the maximum transmission speed of the playback apparatus, a predetermined amount of the catalogue information must have already been played back and stored in a temporary storage, so that both the audio and the catalogue contents can be simultaneously played back.

That is, when the storage medium, in which information for forming the catalogue is stored, is inserted into a driver, a player or an editor, the catalogue information stored in the storage medium is read and stored in a temporary storage, i.e., a memory to be output in the form of an image if necessary. Here, in order to store the catalogue information read from the storage medium, in the memory, the image size must be defined, and further a method for effectively using the memory must be provided.

It is also preferable that navigation information, which has been proposed in the DVD-Video, i.e., search information added to the catalogue information such that a user can search an arbitrary catalogue page, and a specification for processing the search information must be provided. Further, an editing system manufacturing a catalogue corresponding to the specification shares with an editing system according to the DVD-Video specification.

Here, the DVD-Read Only Memory (ROM) means a record medium defined by the physical specification of Part 1 of a DVD specification for read-only disc produced by Toshiba corporation and other companies in August, 1996 and the file system specification of Part 2 thereof. Also, the DVD-video means video edited by an image information recording method defined by the video specification of Part 3 thereof or a DVD-ROM disk in which the video is recorded.

EP 0 738 999 discloses a DVD storing different kinds of songs as audio data and menu data.

It is an aim of embodiments of the present invention to provide a storage medium for storing catalogue information to satisfy the above-described conditions.

It is another aim to provide, playback apparatus and method for reading desired catalogue contents from catalogue information related to audio data, while the audio data stored in a DVD disk is played back.

It is still another aim of embodiments of the present invention to provide an apparatus and method for automatically accessing the location of the catalogue using real-time playback information extracted from audio data to be played back without command to read the catalogue in a predetermined location, while audio data stored in a DVD disk is played back.
According to a first aspect of the invention, a method of playing back data on a storage medium, the method as described in claim 1.
According to a second aspect of the invention there is provided a method of recording data as set out in claim 12.

For a better understanding of the invention, and to show how embodiments of the same may be carried into effect, reference will now be made, by way of example, to the accompanying diagrammatic drawings, in which:
Figure 1 shows a digital versatile disk (DVD)-read only memory (ROM) structure of one dimension according to an example of a storage medium storing catalogue information of the present invention;
Figure 2 is an example of a table showing catalogue playback information for playing back catalogue information according to the present invention; and
Figure 3 is a block diagram of an exemplary playback apparatus for playing back catalogue information according to the present invention.

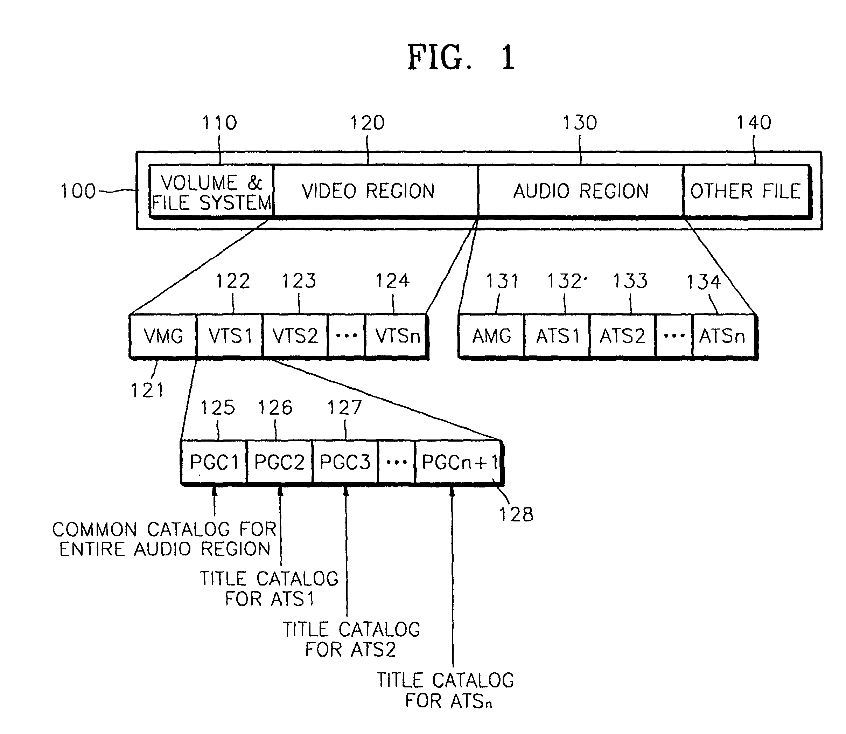

Referring to Figure 1, the storage space of the entire DVD medium is a volume space 100, which includes a volume and file system region 110 having information on the volume and recorded file structure, a video region 120 for recording image information, an audio region 130 for recording audio data and an other file region 140.

The above data regions may have no information in the video region 120, and the catalogue data related to each music may exist in a predetermined area of the audio region 130, and the other file region 140 may or may not exist.

Also, the video region 120 and the audio region 130 may consist of a video management (VMG) region 121 and an audio management (AMG) region 131 having management information on the recorded image and audio, respectively and video title sets (VTS) 121 to 124 and audio title sets (ATS) 132 to 134, respectively, which are files in which the image and audio data are recorded. The VTS1 consists of a plurality of program chains (PGC) 125 to 128. Here, the PGC indicates a set of related data. The VTS1 file for the catalogue may have information on still pictures formed of a plurality of catalogues and sub-pictures, and navigation information for controlling the information on the still pictures and the sub-pictures. VTS2 to VTSn may have information other than the catalogue information. As shown in Figure 1, all image information related to the audio region 130 is stored in the VTS1 122, so that the video region may include only the VMG 121 and the VTS1 122.

Here, the structure of the information on the still picture and sub-picture, and the navigation, and the rules thereof are shown in the DVD-video specification.

Also, the catalogue information can be effectively used by dividing the catalogue information into one common catalogue PGC1 125 for the entire audio region and a plurality of title catalogues PGC2, PGC3, ..., PGCn+1 126, 127, 128 corresponding to each audio title recorded in the audio region 130. That is, a first audio title set (ATS1), i.e., the title of a catalogue related to a first item of music (such as a song) is stored in PGC2, and a second title set (ATS2), i.e., the title of a catalogue related to a second item of music is stored in PGC3, and thus the nth audio title set (ATSn), i.e., the title of a catalogue related to the nth item of music is stored in PGCn+1. The common catalogue and each title catalogue are formed in a unit of a program chain (PGC) in the video title.

According to embodiments of the present invention, the catalogue playback information for connecting VTS and ATS to each other to play back is stored in the AMG region 131 or a predetermined region (information region) of the audio file. The AMG region 131 has a space for recording information on the entire audio region and each title, and a location of the catalogue information may be additionally recorded on the AMG region 131.

In an embodiment of the present invention, the catalogue playback information which is stored in the AMG region or the audio file region, may be stored in any location. Also, when the disk begins to be read, an appropriate means is provided capable of distinguishing whether there exists the catalogue playback information or not. The means may define the file names, a region of a disk predetermined by a physical or logical address may be designated as a space for storing catalogue playback information, or information indicates whether existence of a file in which the catalogue playback information is stored or not and a location of the file in the data region to be necessarily read such as a volume information region when the disk is read.

The catalogue playback information may include the location of the image information in which the catalogue is recorded, a file identifier (ID) and an auto presentation information table in which the location of the catalogue to be played back corresponding to the predetermined time according to real-time playback information of the audio obtained by real-time playback the audio.

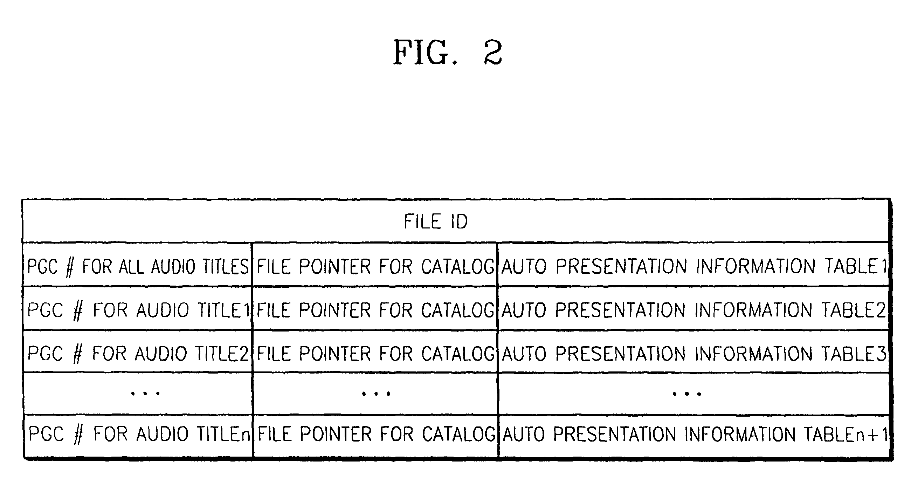

In Figure 2, the file ID can recognize a file in which the catalogue playback information is recorded. A catalogue PGC number indicates the number corresponding to a common catalogue and a title catalogue in the video region in which the catalogue is recorded. A catalogue pointer indicates the location on the disk of a file or a PGC in which the catalogue is recorded.

Also, the auto presentation information table has playback time information capable of appropriately and automatically playing back the catalogue, using the real-time playback information obtained from the audio data while each recorded title is played back, and information on the playback location of the catalogue, so that the auto presentation information table has information on the still picture and the sub-picture to be played back within catalogues when a user has no commands while one title is played back.

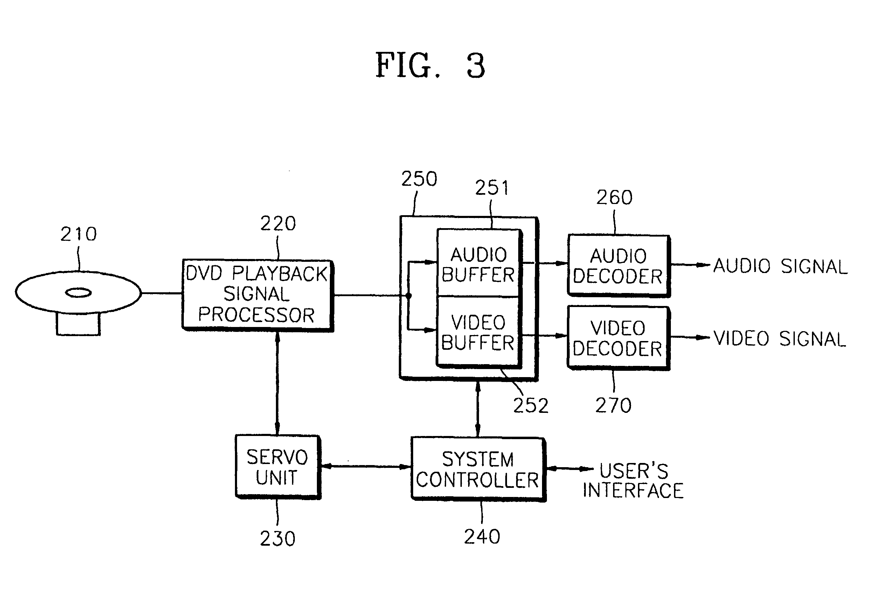

In Figure 3, a signal read from a disk 210 is restored to a digital signal through a DVD playback processing unit 220 according to the physical specification of the DVD-ROM, to provide the restored signal to a buffer memory 250.

The restored digital signal is divided into audio data and video data under the control of a system controller 240 and the audio data of the DVD-Audio specification as an example is written in an audio buffer 251, and video data of the DVD-Video specification as an example, i.e., catalogue data is written in a video buffer 252. At this time, the buffer memory 250 can use one memory space or an additional memory.

The catalogue data stored in the buffer memory 250 is read in accordance with a control signal generated by the system controller 240 and the read catalogue data is restored to an image signal to be output. At this time, the system controller 240 generates an appropriate control signal based on control commands of a user through a remote controller, the auto presentation information table according to catalogue playback information, real-time playback information extracted from the audio data, and navigation information of the catalogue data, such that the catalogue data stored on the video buffer 252 to be played back is output through the video decoder 270.

Meanwhile, the audio data of the DVD-Audio specification read from the audio buffer 251 is provided to the audio decoder 260 and the provided audio data is restored to an audio signal to be output.

Here, the video decoder 270 indicates a device restoring image data produced by the DVD-Video specification to an initial image and information added to the image. The apparatus for playing back the DVD-Video has already been produced and such apparatus is well-known to a person skilled in the art. Also, the audio decoder 260 restores the audio data consisting of the encoded audio data coded by linear pulse coded modulation (linear PCM) or a predetermined manner, management information for managing the audio data and real-time playback information to initial audio and additional information. The system controller 240 and a servo unit 230 controls the system to appropriately operate using the control commands from a user and various control signals obtained by playback signals.

Subsequently, playback operation will be described by a video buffer 252 writing and reading catalogue data shown in Figure 3.

The playback apparatus of Figure 3 must store information on the common catalogue and the title catalogue in the video buffer 252, before a predetermined audio title is played back. If not, desired catalogue information cannot be played back while the music is played back.

When either the common catalogue or the title catalogue is selected, the sum of the two catalogue data should be smaller than the memory capacity of the video buffer 252 for playing back the catalogue. Referring to Figure 1, assuming that the PGC1 125 is the common catalogue for the entire audio region, and the PCG2 126 is the audio title 1, i.e., the title catalogue 1 related to the first music, and the PCG3 127 is the title catalogue 2 for the second music, and the PGCn+1 128 is the title catalogue n for the nth music, the catalogue information required for playing back the music has the common catalogue information and the title catalogue for the music to be played back.

Meanwhile, the amount of buffer memory of the playback apparatus playing back the DVD-Video is approximately 4 MB (megabytes). This functions as a time buffer for resolving an inconsistency between a transmission speed of data read from the disk such as a variable buffer rate and a bit rate of audio played back in real-time or image information.

The conventional buffer must be used to play back audio in real-time, and an additional memory must be used to play back the catalogue. Thus, assuming that a memory of 16 MB is the entire buffer memory 250 when one memory is used, the memory size of the video buffer 252 for playing back the catalogue is 12MB. For instance, when the amount of the data of the common catalogue is 5MB, the amount of the title catalogue cannot exceed 7 MB.

Also, the title catalogue information for each title may not exist. When the sum of the entire catalogue data is smaller than the predetermined memory capacity of the video buffer 252, the catalogue is not classified to the common catalogue and the title catalogue, and the catalogue information on all music can be recorded in the common catalogue.

When the disk is played back initially, the system controller 240 reads volume information of the disk, the file system, and information on VMG and AMG. As described above, the PGC data in which the catalogue information exists is read from the video buffer 252 according to the catalogue playback information stored in the AMG region 131 or in a predetermined file. When required catalogue data is read, the audio information is read to provide the read audio information to the audio decoder 260 through the audio buffer 251, and the audio information is converted into an audio signal and the converted audio signal is output through the audio decoder 260.

Meanwhile, if a user selects the catalogue, i.e., if the user inputs commands for a desired catalogue through an input unit such as a remote controller for controlling the playback apparatus, the catalogue information predetermined catalogue data stored in the video buffer 252 corresponding to the input commands is provided to the decoder 270.

If the user does not input commands for playing back the predetermined catalogue, i.e., the user does not operate for a predetermined time, or the user sets an auto presentation mode, the contents stored in the video buffer 252 is output through the video decoder 270 to output an image of the predetermined catalogue using the information in the auto presentation information table.

At this time, the catalogue information consists of still pictures for the backgrounds and sub-pictures for transferring characters and the still pictures and the sub-pictures are controlled using the navigation information defined by the DVD-Video specification. Thus, compared to the case of using only still pictures, 32 sub-pictures can be selected from the DVD-Video, which supports multiple languages.

Also, if the still picture includes character information, the increase in the resolution of the still picture is required for playing back the character information to distinct pictures, so that the compression ratio cannot be increased, and the background image and the character information are divided, so that the compression ratio for the background is increased, and characters can effectively be coded using a compression method for effectively compressing characters defined by the DVD-Video.

As described above, the catalogue function is realized using the DVD-Video specification, to thereby edit the catalogue for DVD-Audio using an editing system for the DVD-Video, and the playback apparatus for playing back the catalogue of the DVD-Audio plays back also the DVD-Video, to thereby minimize additional circuits.

Also, according to embodiments of the present invention, the predetermined DVD-Video specification is used, so that the character information of the catalogue is not processed as the still picture but as the sub-picture, to thereby enable multiple language.

## Claims

1. A method of playing back data on a storage medium (210), the method comprising:
reading audio data and catalog data comprising additional data for illustrating the contents of the audio data, such as still pictures and captions as video data corresponding to the audio data and catalog playback information for playing back the audio data in relation to the catalog data, wherein the catalog data includes common catalog data (125) commonly applied for more than one audio data recorded on the storage medium (210) and title catalog data (126-128) corresponding to each item of the audio data, and
playing back the audio data and the catalog data read from the storage medium (210),
**characterised in that** the catalog playback information includes information on a location of a catalog data region (120) in which the catalog data is recorded, and also includes an auto presentation information table having playback time information capable of playing back the catalogue data using real time playback information, the auto presentation information table also determining a location of the catalog data to be played back corresponding to a predetermined time in accordance with the real-time playback information of audio obtained from the audio data during real-time playing back.

2. The method of claim 1, wherein the storage medium 210 has an audio region (130) for the audio data which includes an audio data recording region (132-134) in which the audio data is recorded and an audio information recording region (131) for the entire audio data and/or audio data units of distinct items of the audio data, in which the catalog playback information for playing back the audio data in relation to the image information is stored

3. The method of claim 2, wherein the playing back of the common catalog data (125) and the title catalog data (126-128) comprises playing back the common catalog data (125) and the title catalog data (126-128) according to a predetermined sequence stored in the auto presentation information table.

4. The method of any preceding claim, wherein the playing back of the common catalog data (125) and the title catalog data (126-128) comprises:
receiving a selection of a user; and
playing back the common catalog data (125) and the title catalog data (126-128) according to the selection of the user.

5. The method of claim 4, wherein the playing back of the common catalog data (125) and the title catalog data (126-128) comprises:
preferentially playing back the common catalog data (125) and the title catalog data (126-128) selected by the user; and
playing back the common catalog data (125) and the title catalog data (126-128) satisfying a predetermined condition.

6. The method of claim 5, wherein the predetermined condition is a case of the user not selecting the common catalog data (125) and the title catalog data (126-128) for a predetermined amount of time or setting a catalog auto presentation mode.

7. The method of any preceding claim, wherein the playing back of the common catalog data (125) and the title catalog data (126-128) is performed simultaneously with the playing back of the audio data.

8. The method of claim 7, further comprising storing the common catalog data (125) and the title catalog data (126-128) prior to the playing back of the common catalog data (125), the title catalog data (126-128), and the audio data.

9. The method according to any preceding claim, further comprising:
storing the read common catalog data (125) and title catalog data (126-128) prior to reading the audio data from the storage medium (210).

10. The method according to any preceding claim, further comprising:
storing the common catalog data (125) and one title of the title catalog data (126-128) before reading a corresponding title of the audio data.

11. The method according to any preceding claim, further comprising:
controlling playback of the common catalog data (125) and the title of the title catalog data (126-128) according to a selection of a user.

12. A method of recording data on a storage medium (210), comprising:
encoding audio data, catalog data comprising additional data for illustrating the contents of the audio data, such as still pictures and captions as video data corresponding to the audio data, and catalog playback information for playing back the audio data in relation to the catalog data wherein the catalog data includes common catalog data (125) commonly applied for more than one audio data recorded on the storage medium (210) and title catalog data (126-128) corresponding to each item of the audio data, and
recording the encoded audio data, the encoded catalog data and the encoded catalog playback information on the storage medium (210),
**characterised in that** the catalog playback information includes information on a location of a catalog data region (120) in which the catalog data is recorded, and also includes an auto presentation information table having playback time information capable of playing back the catalogue data using real time playback information, the auto presentation information table also determining a location of the catalog data to be played back corresponding to a predetermined time in accordance with the real-time playback information of audio obtained from the audio data during real-time playing back.

13. The method according to claim 12, further comprising defining file names of the common catalog data (125) and the title catalog data (126-128) for storage on the storage medium (210), defining a region (120) of the storage medium predetermined by a physical or logical address designated as a space for storing catalog playback information, or defining information indicating whether a file exists on the storage medium (210) in which the catalog playback information is stored and a location of the file in a volume information region of the storage medium (210), wherein the catalog playback information is for playing back the audio data in relation to the catalog data.

14. The method according to claim 12 or claim 13, wherein the encoding of the catalog data comprises:
encoding video data representing an image which is a still picture relating to the audio data and additional information which represents a sub-picture for transferring characters; and
storing the encoded video data and the encoded additional data on the storage medium (210).

15. The method according to any one of claims 12 to 14, wherein the encoding comprises encoding the common catalog data (125) and the title catalog data (126-128) according to a standard digital versatile disk-video (DVD-video) specification.

16. The method according to claim 13 or one of claims 14 or 15 when dependent on claim 13, wherein the recording comprises recording the common catalog data (125) and the title catalog data (126-128) in a catalog data region of a volume space of the storage medium (210), wherein the method further comprises recording the catalog playback information in an audio management region (131) of the audio region (130) and the distinct items of the audio data in respective audio title sets (132-134) of the audio region (130).

17. The method according to claim 16, wherein the recording of the common catalog data (125) and the title catalog data (126-128) comprises recording the common catalog data (125) and the title catalog data (126-128) in an image title set (121-124) of the catalog information region, and the optical pickup records the catalog playback information in an audio management region (131) of the audio region (130) and the distinct items of the audio data in respective audio title sets (132-134) of the audio region (130).

18. The method according to claim 16, further comprising dividing the title catalog data (126-128) in distinct title catalog data corresponding to the respective ones of the distinct items of the audio data, wherein the recording further comprises recording the distinct title catalog data into respective program chains (PGC) of the image title set.

19. The method according to claim 13 or one of claims 14 to 18 when dependent on claim 13, wherein the catalog playback information comprises locations of catalog data information in which the catalog data is recorded, a file identifier (10), and an auto presentation information table in which is stored the locations of one item of the image information to be played back corresponding to a predetermined time according to real-time playback information of the audio data obtained by real-time playback of the audio data.

20. The method according to claim 13 or one of claims 14 to 19 when dependent on claim 13, wherein the catalog playback information comprises locations of catalog data in which the catalog information is recorded, a file identifier (ID), and an auto presentation information table in which is stored the locations of one item of the catalog data to be played back corresponding to a predetermined time according to real-time playback information of the audio data obtained by real-time playback of the audio data, the file identifier (ID) comprises a plurality of program chain (PGC) numbers corresponding to the program chains of common catalog data (125) and the title catalog data (126- 128), catalog pointers pointing to locations on the storage medium (210) of the program chains (PGC), and the auto presentation table has playback time information which appropriately and automatically plays back the catalog data, using the real-time playback information obtained from the audio data while each recorded item of the title catalog data (126-128) is played back, and information on the playback location of the catalog data, so that the auto presentation information table has information on still pictures and sub-pictures to be played back within the catalog data when a user has not input commands while one item of the title catalog data (126-128) is played back.

## Patentansprüche

1. Verfahren zum Wiedergeben von Daten auf einem Speichermedium (210), wobei das Verfahren aufweist:
Lesen von Audiodaten und Katalogdaten, aufweisend zusätzliche Daten zum Darstellen der Inhalte der Audiodaten, wie beispielsweise Standbilder und Überschriften, als Videodaten, entsprechend zu den Audiodaten und Katalog-Wiedergabe-Informationen zum Wiedergeben der Audiodaten in Bezug auf die Katalogdaten, wobei die Katalogdaten gemeinsame Katalogdaten (125), gemeinsam angewandt für mehr als einen AudioDatenteil, aufgezeichnet auf dem Speichermedium (210), und Titel-Katalogdaten (126-128) entsprechend zu jedem Element der Audiodaten, umfassen, und
Wiedergeben der Audiodaten und der Katalogdaten, gelesen von dem Speichermedium (210),
**dadurch gekennzeichnet, dass** die Katalog-Wiedergabe-Informationen Informationen über eine Stelle eines Katalog-Datenbereichs (120), in dem die Katalogdaten aufgezeichnet sind, umfassen, und auch eine Auto-Präsentations-Informations-Tabelle umfassen, die Wiedergabe-Zeit-Informationen, geeignet zum Wiedergeben der Katalogdaten, unter Verwendung von Lesezeit-Wiedergabe-Informationen, besitzen, wobei die Auto-Präsentations-Informations-Tabelle auch eine Stelle der Katalogdaten, die wiedergegeben werden sollen, entsprechend zu einer vorbestimmten Zeit entsprechend zu den Realzeit-Wiedergabe-Informationen von Audioteilen, erhalten von den Audiodaten während einer Realzeit-Wiedergabe, bestimmt.

2. Verfahren nach Anspruch 1, wobei das Speichermedium (210) einen Audiobereich (130) für die Audiodaten besitzt, der einen Audiodaten-Aufzeichnungsbereich (132-134), in dem die Audiodaten aufgezeichnet sind, und einen Audio-Informations-Aufzeichnungsbereich (131) für die gesamten Audiodaten und/oder Audiodaten-Einheiten von bestimmten Elementen der Audiodaten umfasst, in dem die Katalog-Wiedergabe-Informationen zum Wiedergeben der Audiodaten in Bezug auf Bildinformationen gespeichert sind.

3. Verfahren nach Anspruch 2, wobei die Wiedergabe der gemeinsamen Katalogdaten (125) und der Titel-Katalogdaten (126-128) eine Wiedergabe der gemeinsamen Katalogdaten (125) und der Titel-Katalogdaten (126-128) entsprechend zu einer vorbestimmten Folge, gespeichert in der Auto-Prasentations-Informations-Tabelle, aufweisen.

4. Verfahren nach einem vorhergehenden Anspruch, wobei die Wiedergabe der gemeinsamen Katalogdaten (125) und der Titel-Katalogdaten (126-128) aufweist:
Aufnehmen einer Auswahl eines Benutzers; und
Wiedergeben der gemeinsamen Katalogdaten (125) und der Titel-Katalogdaten (126-128) entsprechend der Auswahl des Benutzers.

5. Verfahren nach Anspruch 4, wobei die Wiedergabe der gemeinsamen Katalogdaten (125) und der Titel-Katalogdaten (126-128) aufweist:
bevorzugtes Wiedergeben der gemeinsamen Katalogdaten (125) und der Titel-Katalogdaten (126-128), ausgewählt durch den Benutzer; und
Wiedergeben der gemeinsamen Katalogdaten (125) und der Titel-Katalogdaten (126-128), die einen vorbestimmten Zustand erfüllen.

6. Verfahren nach Anspruch 5, wobei der vorbestimmte Zustand ein Fall des Benutzers, der nicht die gemeinsamen Katalogdaten (125) auswählt, und der Titel-Katalogdaten (126-128) für eine vorbestimmte Zeitdauer oder Einstellung eines Katalog-Auto-Präsentations-Modus ist.

7. Verfahren nach einem vorhergehenden Anspruch, wobei die Wiedergabe der gemeinsamen Katalogdaten (125) und der Titel-Katalogdaten (126-128) gleichzeitig mit dem Wiedergeben der Audiodaten durchgeführt wird.

8. Verfahren nach Anspruch 7, das weiterhin ein Speichern der gemeinsamen Katalogdaten (125) und der Titel-Katalogdaten (126-128) vor der Wiedergabe der gemeinsamen Katalogdaten (125), der Titel-Katalogdaten (126-128) und der Audiodaten aufweist.

9. Verfahren nach einem vorhergehenden Anspruch, das weiterhin aufweist:
Speichern der gelesenen, gemeinsamen Katalogdaten (125) und der Titel-Katalogdaten (126-128) vor einem Lesen der Audiodaten von dem Speichermedium (210).

10. Verfahren nach einem vorhergehenden Anspruch, das weiterhin aufweist:
Speichern der gemeinsamen Katalogdaten (125) und eines Titels der Titel-Katalogdaten (126-128) vor einem Lesen eines entsprechenden Titels der Audiodaten.

11. Verfahren nach einem vorhergehenden Anspruch, das weiterhin aufweist:
Steuern einer Wiedergabe der gemeinsamen Katalogdaten (125) und des Titels der Titel-Katalogdaten (126-128) entsprechend einer Auswahl eines Benutzers.

12. Verfahren zum Aufzeichnen von Daten auf einem Speichermedium (210), das aufweist:
Codieren von Audiodaten, Katalogdaten, die zusätzliche Daten zum Darstellen der Inhalte der Audiodaten, wie beispielsweise Standbilder und Überschriften, von Videodaten entsprechend zu den Audiodaten und von Katalog-Wiedergabe-Informationen zum Wiedergeben der Audiodaten in Bezug auf die Katalogdaten, wobei die Katalogdaten gemeinsame Katalogdaten (125), gemeinsam angewandt für mehr als einen Audiodatenteil, aufgezeichnet auf dem Speichermedium (210), und Titel-Katalogdaten (126-128) entsprechend zu jedem Element der Audiodaten, umfassen, aufweisen, und
Aufzeichnen der codierten Audiodaten, der codierten Katalogdaten und der codierten Katalog-Wiedergabe-Informationen auf dem Speichermedium (210),
**dadurch gekennzeichnet, dass** die Katalog-Wiedergabe-Informationen Informationen über eine Stelle eines Katalog-Datenbereichs (120), in dem die Katalogdaten aufgezeichnet sind, umfassen, und auch eine Auto-Präsentations-Informations-Tabelle umfassen, die Wiedergabe-Zeit-Informationen, geeignet zum Wiedergeben der Katalogdaten, unter Verwendung von Realzeit-Wiedergabe-Informationen, besitzt, wobei die Auto-Präsentations-Informations-Tabelle auch eine Stelle der Katalogdaten, die wiedergegeben werden sollen, entsprechend zu einer vorbestimmten Zeit entsprechend den Realzeit-Wiedergabe-Informationen des Audioteils, erhalten von den Audiodaten während einer Realzeit-Wiedergabe, bestimmt.

13. Verfahren nach Anspruch 12, das weiterhin ein Definieren von Dateinamen der gemeinsamen Katalogdaten (125) und der Titel-Katalogdaten (126-128) zum Speichern auf dem Speichermedium (210), ein Definieren eines Bereichs (120) des Speichermediums, vorbestimmt durch eine physikalische oder logische Adresse, bezeichnet als ein Raum, zum Speichern von Katalog-Wiedergabe-Informationen, oder ein Definieren von Informationen, die anzeigen, ob eine Datei auf dem Speichermedium (210) existiert, in der die Katalog-Wiedergabe-Informationen gespeichert sind, und einer Stelle der Datei in einem Verzeichnis-Informations-Bereich des Speichermediums (210), wobei die Katalog-Wiedergabe-Informationen zum Wiedergeben der Audiodaten in Bezug auf die Katalogdaten dienen, aufweist.

14. Verfahren nach Anspruch 12 oder Anspruch 13, wobei das Codieren der Katalogdaten aufweist:
Codieren von Videodaten, die ein Bild darstellen, das ein Standbild ist, sich auf die Audiodaten und zusätzliche Informationen beziehend, die ein Unterbild zum Übertragen von Zeichen darstellen; und
Speichern der codierten Videodaten und der codierten, zusätzlichen Daten auf dem Speichermedium (210).

15. Verfahren nach einem der Ansprüche 12 bis 14, wobei das Codieren ein Codieren der gemeinsamen Katalogdaten (125) und der Titel-Katalogdaten (126-128) entsprechend einer Standard-Digital-Versatil-Disk-Video-(DVD-Video)-Spezifikation aufweist.

16. Verfahren nach Anspruch 13 oder einem der Ansprüche 14 oder 15, wenn er von Anspruch 13 abhängig ist, wobei das Aufzeichnen ein Aufzeichnen der gemeinsamen Katalogdaten (125) und der Titel-Katalogdaten (126-128) in einem Katalog-Datenbereich eines Verzeichnisraums des Speichermediums (210) aufweist, wobei das Verfahren weiterhin ein Aufzeichnen der Katalog-Wiedergabe-Informationen in einem Audio-Verwaltungs-Bereich (131) des Audiobereichs (130) und der bestimmten Elemente der Audiodaten in jeweiligen Audio-Titel-Sätzen (132-134) des Audiobereichs (130) aufweist.

17. Verfahren nach Anspruch 16, wobei das Aufzeichnen der gemeinsamen Katalogdaten (125) und der Titel-Katalogdaten (126-128) ein Aufzeichnen der gemeinsamen Katalogdaten (125) und der Titel-Katalogdaten (126-128) in einem Bild-Titel-Satz (121-124) des Katalog-Informations-Bereichs aufweist, und der optische Aufnehmer die Katalog-Wiedergabe-Informationen in einem Audio-Verwaltungs-Bereich (131) des Audiobereichs (130) und die bestimmten Elemente der Audiodaten in jeweiligen Audio-Titel-Sätzen (132-134) des Audiobereichs (130) aufzeichnet.

18. Verfahren nach Anspruch 16, das weiterhin ein Unterteilen der Titel-Katalogdaten (126-128) in bestimmte Titel-Katalogdaten entsprechend zu den jeweiligen solchen der bestimmten Elemente der Audiodaten aufweist, wobei das Aufzeichnen weiterhin ein Aufzeichnen der bestimmten Titel-Katalogdaten in jeweilige Programmketten (PGC) des Bild-Ttel-Satzes aufweist.

19. Verfahren nach Anspruch 13 oder einem der Ansprüche 14 bis 18, wenn er von Anspruch 13 abhängig ist, wobei die Katalog-Wiedergabe-Informationen Stellen von Katalog-Daten-Informationen, in denen die Katalogdaten aufgezeichnet sind, einen Datei-Identifizierer (10) und eine Auto-Präsentations-Informations-Tabelle, in der die Steilen eines Elements der Bildinformationen, die wiedergegeben werden sollen, entsprechend zu einer vorbestimmten Zeit entsprechend zu Realzeit-Wiedergabe-Informationen der Audiodaten, erhalten durch eine Realzeit-Wiedergabe der Audiodaten, gespeichert sind, aufweisen.

20. Verfahren nach Anspruch 13 oder einem der Ansprüche 14 bis 19, wenn er von Anspruch 13 abhängig ist, wobei die Katalog-Wiedergatie-Informationen Stellen von Katalogdaten, in denen die Kataloginformationen aufgezeichnet sind, einen Datei-Identifizierer (ID) und eine Auto-Präsentations-Informations-Tabelle, in der die Stellen eines Elements der Katalogdaten gespeichert sind, entsprechend zu einer vorbestimmten Zeit gemäß Realzeit-Wiedergabe-Informationen der Audiodaten, erhalten durch eine Realzeit-Wiedergabe der Audiodaten, wiedergegeben werden soll, aufweisen, wobei der Datei-Identifizierer (ID) eine Mehrzahl von Programm-Ketten-(PGC)-Nummern entsprechend zu den Programmketten von gemeinsamen Katalogdaten (125) und der Titel-Katalogdaten (126-128), Katalog-Hinweiszeiger, die auf Stellen auf dem Speichermedium (210) der Programmketten (PGC) hinweisen, aufweist, und die Auto-Präsentations-Tabelle Wiedergabe-Zeit-Informationen, die geeignet und automatisch die Katalogdaten wiedergeben, unter Verwendung der Realzeit-Wiedergabe-Informationen, erhalten von den Audiodaten, während jedes aufgezeichnete Element der Titel-Katalogdaten (126-128) wiedergegeben wird, und Informationen über die Wiedergabestelle der Katalogdaten besitzt, so dass die Auto-Präsentations-Informations-Tabelle Informationen über Standbilder und Unterbilder, die wiedergegeben werden sollen, innerhalb der Katalogdaten, wenn ein Benutzer keine Befehle eingegeben hat, während ein Element der Titel-Katalogdaten (126-128) wiedergegeben wird, besitzt.

## Revendications

1. Procédé de reproduction de données sur un support de mémorisation (210), le procédé comportant les étapes consistant à :
lire des données audio et des données de catalogue comportant des données additionnelles pour représenter le contenu des données audio, telles que des images fixes et des légendes en tant que données vidéo correspondant aux données audio, et des informations de reproduction de catalogue pour reproduire les données audio en relation aux données de catalogue, les données de catalogue incluant des données de catalogue commun (125) généralement appliquées à plus d'une donnée audio enregistrée sur le support de mémorisation (210) et des données de catalogue de titres (126-128) correspondant à chaque élément des données audio, et
reproduire les données audio et les données de catalogue lues à partir du support de mémorisation (210),
**caractérisé en ce que** les informations de reproduction de catalogue incluent des informations concernant un emplacement d'une région de données de catalogue (120) dans laquelle les données de catalogue sont enregistrées, et incluent également un tableau d'informations de présentation automatique ayant des informations de temps de reproduction capables de reproduire les données de catalogue en utilisant des informations de reproduction en temps réel, le tableau d'informations de présentation automatique déterminant également un emplacement des données de catalogue à reproduire correspondant à une durée prédéterminée conformément aux informations de reproduction en temps réel de l'audio obtenu à partir des données audio pendant la reproduction en temps réel.

2. Procédé selon la revendication 1, dans lequel le support de mémorisation (210) a une région audio (130) pour les données audio qui inclut une région d'enregistrement de données audio (130-134) dans laquelle les données audio sont enregistrées et une région d'enregistrement d'informations audio (131) pour la totalité des données audio et/ou des unités de données audio d'éléments distincts des données audio, dans laquelle les informations de reproduction de catalogue pour reproduire les données audio en relation aux informations d'image sont mémorisées.

3. Procédé selon la revendication 2, dans lequel la reproduction des données de catalogue commun (125) et des données de catalogue de titres (126-128) comporte la reproduction des données de catalogue commun (125) et des données de catalogue de titres (126-128) conformément à une séquence prédéterminée mémorisée dans le tableau d'informations de présentation automatique.

4. Procédé selon l'une quelconque des revendications précédentes, dans lequel la reproduction des données de catalogue commun (125) et des données de catalogue de titres (126-128) comporte les étapes consistant à :
recevoir une sélection d'un utilisateur, et
reproduire les données de catalogue commun (125) et les données de catalogue de titres (126-128) conformément à la sélection de l'utilisateur.

5. Procédé selon la revendication 4, dans lequel la reproduction des données de catalogue commun (125) et des données de catalogue de titres (126-128) comporte les étapes consistant à :
reproduire de manière préférentielle les données de catalogue commun (125) et les données de catalogue de titres (126-128) sélectionnées par l'utilisateur, et
reproduire les données de catalogue commun (125) et les données de catalogue de titres (126-128) satisfaisant à une condition prédéterminée.

6. Procédé selon la revendication 5, dans lequel la condition prédéterminée est un cas où l'utilisateur ne sélectionne pas les données de catalogue commun (125) et les données de catalogue de titres (126-128) pendant une durée prédéterminée ou établit un mode de présentation automatique de catalogue.

7. Procédé selon l'une quelconque des revendications précédentes, dans lequel la reproduction des données de catalogue commun (125) et des données de catalogue de titres (126-128) est effectuée simultanément à la reproduction des données audio.

8. Procédé selon la revendication 7, comportant en outre l'étape consistant à mémoriser les données de catalogue commun (125) et les données de catalogue de titres (126-128) préalablement à la reproduction des données de catalogue commun (125), des données de catalogue de titres (126-128), et des données audio.

9. Procédé selon l'une quelconque des revendications précédentes, comportant en outre l'étape consistant à :
mémoriser les données de catalogue commun lues (125) et les données de catalogue de titres (126-128) préalablement à la lecture des donnés audio à partir du support de mémorisation (210).

10. Procédé selon l'une quelconque des revendications précédentes, comportant en outre l'étape consistant à :
mémoriser les données de catalogue commun (125) et un titre des données de catalogue de titres (126-128) avant la lecture d'un titre correspondant des données audio.

11. Procédé selon l'une quelconque des revendications précédentes, comportant en outre l'étape consistant à :
commander la reproduction des données de catalogue commun (125) et le titre des données de catalogue de titres (126-128) conformément à une sélection d'un utilisateur.

12. Procédé d'enregistrement de données sur un support de mémorisation (210), comportant les étapes consistant à :
coder des données audio, des données de catalogue comportant des données additionnelles pour représenter le contenu des données audio, telles que des images fixes et des légendes en tant que données vidéo correspondant aux données audio, et des informations de reproduction de catalogue pour reproduire les données audio en relation aux données de catalogue, les données de catalogue incluant des données de catalogue commun (125) communément appliquées à plus d'une donnée audio enregistrée sur le support de mémorisation (210) et des données de catalogue de titres (126-128) correspondant à chaque élément des données audio, et
enregistrer les données audio codées, les données de catalogue codées et les informations de reproduction de catalogue codées sur le support de mémorisation (210),
**caractérisé en ce que** les informations de reproduction de catalogue incluent des informations concernant un emplacement d'une région de données de catalogue (120) dans laquelle les données de catalogue sont enregistrées, et incluent également un tableau d'informations de présentation automatique ayant des informations de temps de reproduction capables de reproduire les données de catalogue en utilisant les informations de reproduction en temps réel, le tableau d'informations de présentation automatique déterminant également un emplacement des données de catalogue à reproduire correspondant à une durée prédéterminée conformément aux informations de reproduction en temps réel de l'audio obtenu à partir des données audio pendant la reproduction en temps réel.

13. Procédé selon la revendication 12, comportant en outre les étapes consistant à définir des noms de fichier des données de catalogue commun (125) et des données de catalogue de titres (126-128) en vue d'une mémorisation sur le support de mémorisation (210), définir une région (120) du support de mémorisation prédéterminé par l'intermédiaire d'une adresse physique ou logique désignée en tant qu'espace pour mémoriser des informations de reproduction de catalogue, ou définir des informations indiquant si un fichier existe sur le support de mémorisation (210) dans lequel les informations de reproduction de catalogue sont mémorisées et un emplacement du fichier dans une région d'informations de volume du support de mémorisation (210), les informations de reproduction de catalogue étant destinées à reproduire les données audio en relation aux données de catalogue.

14. Procédé selon la revendication 12 ou la revendication 13, dans lequel le codage des données de catalogue comporte les étapes consistant à :
coder des données vidéo représentant une image qui est une image fixe relative aux données audio et des informations additionnelles qui représentent une sous-image pour transférer des caractères, et
mémorise les données vidéo codées et les données additionnelles codées sur le support de mémorisation (210).

15. Procédé selon l'une quelconque des revendications 12 à 14, dans lequel le codage comporte le codage des données de catalogue commun (125) et des données de catalogue de titres (126-128) conformément à une spécification de disque numérique polyvalent-vidéo (DVD-vidéo).

16. Procédé selon la revendication 13 ou l'une des revendications 14 ou 15, lorsqu'elles dépendent de la revendication 13, dans lequel l'enregistrement comporte l'enregistrement des données de catalogue commun (125) et des données de catalogue de titres (126-128) dans une région de données de catalogue d'un espace de volume du support de mémorisation (210), le procédé comportant en outre l'enregistrement des informations de reproduction de catalogue dans une région de gestion audio (131) de la région audio (130) et des éléments distincts des données audio dans des ensembles de titres audio respectifs (132-134) de la région audio (130).

17. Procédé selon la revendication 16, dans lequel l'enregistrement des données de catalogue commun (125) et des données de catalogue de titres (126-128) comporte l'enregistrement des données de catalogue commun (125) et des données de catalogue de titres (126-128) dans un ensemble de titres d'image (121, 124) de la région d'informations de catalogue, et la tête de lecture optique enregistre les informations de reproduction de catalogue dans une région de gestion audio (131) de la région audio (130) et les éléments distincts des données audio dans des ensembles de titres audio respectifs (132-134) de la région audio (130).

18. Procédé selon la revendication 16, comportant en outre l'étape consistant à diviser les données de catalogue de titres (126-128) en données de catalogue de titres distinctes correspondant aux éléments respectifs parmi les éléments distincts des données audio, dans lequel l'enregistrement comporte en outre l'enregistrement des données de catalogue de titres distinctes dans des chaînes de programme (PGC) respectives de l'ensemble de titres d'image.

19. Procédé selon la revendication 13 ou l'une des revendications 14 à 18 lorsqu'elles dépendent de la revendication 13, dans lequel les informations de reproduction de catalogue comportent des emplacements d'informations de données de catalogue dans lesquels les données de catalogue sont enregistrées, un identifiant de fichier (10), et un tableau d'informations de présentation automatique dans lequel est mémorisé l'emplacement d'un élément des informations d'image à reproduire correspondant à une durée prédéterminée conformément aux informations de reproduction en temps réel des données audio obtenues par reproduction en temps réel des données audio.

20. Procédé selon la revendication 13 ou l'une des revendications 14 à 19 lorsqu'elles dépendent de la revendication 13, dans lequel les informations de reproduction de catalogue comportent des emplacements de données de catalogue dans lesquels les informations de catalogue sont enregistrées, un identifiant (ID) de fichier, et un tableau d'informations de présentation automatique dans lequel est mémorisé l'emplacement d'un élément des données d'image à reproduire correspondant à une durée prédéterminée conformément aux informations de reproduction en temps réel des données audio obtenues par reproduction en temps réel des données audio, l'identifiant (ID) de fichier comporte une pluralité de numéros de chaînes de programme (PGC) correspondant aux chaînes de programme de données de catalogue commun (125) et de données de catalogue de titres (126-128), des pointeurs de catalogue pointant vers des emplacements sur le support de mémorisation (210) des chaînes de programme (PGC), et le tableau de présentation automatique a des informations de temps de reproduction qui reproduisent de manière appropriée et automatiquement les données de catalogue, en utilisant les informations de reproduction en temps réel obtenues à partir des données audio pendant que chaque élément enregistré des données de catalogue de titres (126-128) est reproduit, et des informations concernant l'emplacement de reproduction des données de catalogue, de sorte que le tableau d'informations de présentation automatique a des informations concernant des images fixes et des sous-images à reproduire dans les données de catalogue lorsqu'un utilisateur n'a pas d'instructions d'entrée pendant qu'un élément des données de catalogue de titres (126-128) est reproduit.
